# EUROPÄISCHE PATENTSCHRIFT

(11) **EP 2 252 497 B1**
(45) Veröffentlichungstag und Bekanntmachung des Hinweises auf die Patenterteilung: **21.09.2011**
(21) Anmeldenummer: 09715430.6
(22) Anmeldetag: 25.02.2009
(51) Int. Cl.: B62D 53/08, B60R 25/00

(54) **DIEBSTAHLSICHERUNGSVORRICHTUNG FÜR EINE FAHRZEUGKUPPLUNG**
THEFT SECURITY DEVICE FOR A VEHICLE COUPLING
DISPOSITIF ANTIVOL POUR SYSTÈME D'ATTELAGE DE VÉHICULE MOTORISÉ

(30) Priorität: 27.02.2008 DE 102008011835
(43) Veröffentlichungstag der Anmeldung: 24.11.2010
(73) Patentinhaber: Jost-Werke GmbH, 63263 Neu-Isenburg (DE)
(72) Erfinder: ALGÜERA GALLEGO, José Manuel, 63739 Aschaffenburg (DE); SAUPE, Swen, 55122 Mainz (DE)
(74) Vertreter: Fuchs
(86) Internationale Anmeldenummer: PCT/EP2009/052189
(87) Internationale Veröffentlichungsnummer: WO 2009/106529

(56) Entgegenhaltungen:
- DE-A1-102004 029 821
- US-A1- 2003 095 046

## Beschreibung

Die Erfindung betrifft eine Diebstahlsicherung für eine am Fahrzeug angeordnete Fahrzeugkupplung, insbesondere eine Sattelkupplung gemäß dem Oberbegriff des Patentanspruchs 1.

Nutzfahrzeuge bestehen in der Regel aus einem Zugfahrzeug und einem oder mehreren gezogenen Anhängern. Bei einem solchen Gliederzug spricht man von Motorwagen mit Anhänger, beim Sattelzug von einer Zugmaschine und einem Auflieger.

Geparkte und nicht angetriebene Fahrzeugteile können durch mechanische Vorrichtungen jeweils gegen Diebstahl gesichert werden. Die motorisierten Teile des Lastkraftwagens sind meist ebenfalls gegen Einbruch und Diebstahl gesichert, beispielsweise durch Wegfahrsperren oder Alarmanlagen. Sind beide Fahrzeugteile miteinander gekuppelt, besteht ein gewisser Diebstahlschutz über diese Systeme für den gesamten Sattelzug, da ein Abkuppeln nur durch Relativbewegung beider Fahrzeugteile zueinander möglich ist.

Die Anzahl an Diebstählen, bei denen das angetriebene Fahrzeug vom Anhänger oder Auflieger getrennt und dieser anschließend entwendet wird, nimmt jedoch trotz der derzeitigen technischen Hilfsmittel dennoch stetig zu. Es ist daher wünschenswert, Vorrichtungen und Systeme zur Verfügung zu stellen, die verhindern, dass der Auflieger unbefugt abgesattelt werden kann oder zumindest dieser Vorgang so erschwert wird, dass der Versuch dazu von vornherein als aussichtslos erscheint. Aus der WO 03/043838 A2 ist eine Diebstahlsicherung für Sattelkupplungen bekannt, die eine Betätigungseinrichtung mit einem Blockierstift umfasst. Die Sattelkupplung weist einen Verschlusshaken mit einem Sicherungsriegel auf, der über ein Gestänge mit einer Zugstange von Hand betätigbar ist.

Die Diebstahlsicherung sieht vor, dass der Blockierstift entweder in die Bewegungsbahn des Sicherungsriegels oder die der Komponenten des Gestänges zur Betätigung des Sicherungsriegels eingefahren wird, so dass der Sicherungsriegel nicht von seiner Schließstellung in eine Offenstellung bewegt werden kann.

Die Diebstahlsicherungseinrichtung weist einen Empfänger auf, über den die Betätigungseinrichtung angesteuert werden kann. Die Diebstahlsicherungseinrichtung ist an ein Global Positioning System des Zugfahrzeugs gekoppelt. Wenn sich das Fahrzeug nicht auf der vorgesehenen Route bewegt, wird dies von dem GP-System erkannt und ein Signal zur Scharfschaltung des Diebstahlsicherungssystems an den Empfänger gesandt, woraufhin der Blockierstift in Blockierstellung gebracht wird.

Gemäß einer anderen Ausführung kann die Diebstahlsicherungseinrichtung auch per Internet mittels eines extern angeordneten PC's über den Bordcomputer des Zugfahrzeugs angesteuert werden.

Manipulationsversuche an der Sattelkupplung werden ebenfalls von dem Diebstahlsicherungssystem erkannt, was daraufhin selbsttätig in Scharfstellung und somit auch in die Verriegelungsposition geht.

In der WO 03/044627 desselben Anmelders werden weitere Sicherungssysteme beschrieben, wobei unter anderem die Berechtigung des Fahrers über die Eingabe eines Codes überprüft wird. Im Falle der Nichtbeachtung oder im Fall des Abweichens von der Fahrtroute wird automatisch in die Fahrzeugfunktionen eingegriffen.

Die WO 2005/028290 A1 offenbart eine Sattelkupplung mit Diebstahlsicherung, bei der ein Blockierstift unmittelbar am Verschlusshaken angreift und diesen festlegt. Über die Zugstange kann die Verriegelung aufgehoben werden. Ein gewaltsames Trennen von Zugfahrzeug und Auflieger kann dann nicht verhindert werden, weil sich bei ruckartigem Anfahren des Sattelzugs unter Beschädigung oder sogar Zerstörung der Diebstahlsicherungseinrichtung der Verschlusshaken in Offenstellung drehen kann.

Die Diebstahlsicherungseinrichtung umfasst ein Steuergerät in der Fahrerkabine des Zugfahrzeugs, in das zur Freischaltung ein Zahlencode eingegeben werden kann. Ferner sind Sensoren und Anzeigen mit dem Steuerungsgerät zur Überwachung der Sattelkupplung verbunden.

Die DE 195 16 101 A1 beschreibt eine Diebstahlsicherung für einen angekuppelten Sattelauflieger. Zum Schutz eines an ein Zugfahrzeug angekuppelten Sattelaufliegers gegen Diebstahl durch Abkupplung weist die Sattelkupplung ein Schloss auf, über das ein axial bewegbarer Stößel gesteuert wird. Der Stößel greift unmittelbar am Verriegelungselement des Verschlusshakens an, wenn dieser sich in Sperrstellung befindet. Die Anordnung der Diebstahlsicherungseinrichtung ist so gewählt, dass der Stößel allenfalls durch Druck beaufschlagt wird. Die Blockierung des handbetätigten Verschlusshakens hat den Vorteil, dass bei einer Schockbeanspruchung bzw. Überlastung der Handbetätigung die querschnittsschwächeren Glieder der Handbetätigung brechen und in jedem Fall die Verriegelung des Verschlusshakens intakt bleiben. Sämtliche Teile der Diebstahlsicherung werden bei einem gewaltsamen Entriegelungsversuch auf Druck beansprucht, so dass verhältnismäßig geringe Querschnitte die geforderte Funktionssicherheit bieten.

Aus der DE 295 01 043.6 ist ein Diebstahlsicherungssystem unter anderem für Sattelauflieger bekannt, das als elektronische Wegfahrsperre ausgebildet ist. Es ist vorgesehen, dass bei einer Aktivierung der Diebstahlsicherung, d.h. im Falle eines Diebstahls, die Diebstahlsicherung auf die Funktion des Zugfahrzeuges derart einwirkt, dass dieses blockiert wird.

Eine Diebstahlsicherungsvorrichtung für ohne Fahrzeugkupplung mit dem Merkmalen des Oberbegriffs des Anspruchs 1 ist aus der DE 10 2004 029 821 A1 bekannt.

Die bekannten Diebstahlsicherungen werden entweder gezielt aktiviert, z. B. durch den Fahrer, und können nur wieder durch gezielte Eingabe z. B. von Zahlencodes deaktiviert werden.

Es gibt jedoch Notfallsituationen, in denen der Sattelzug durch Notfallhelfer am Unfallort getrennt werden muss. In solchen Fällen ist unter Umständen der Fahrer nicht mehr in der Lage, die Diebstahlsicherung zu deaktivieren bzw. die entsprechenden Einrichtungen zur Deaktivierung der Diebstahlsicherung durch den Fahrer sind nicht mehr funktionsfähig.

Ein Trennen der beiden Fahrzeuge ist dann nur unter großem Aufwand und Einsatz entsprechender Werkzeuge durchführbar. Dies ist nicht nur mit einem erheblichen Zeitaufwand verbunden, sondern kann auch zu einer zusätzlichen Gefährdung des Hilfspersonals und/oder der Verkehrsteilnehmer führen, insbesondere dann, wenn der Sattelzug eine gefährliche Ladung transportiert.

Es ist daher Aufgabe der Erfindung, eine Diebstahlsicherungsvorrichtung zu schaffen, die in Notfallsituationen sich selbsttätig deaktiviert bzw. auf einfache Weise deaktiviert werden kann, so dass ein Trennen von Zugfahrzeug und Anhänger problemlos möglich ist.

Diese Aufgabe wird mit einer Diebstahlsicherungsvorrichtung mit den Merkmalen des Anspruchs 1 gelöst, wobei die Steuereinrichtung an mindestens ein fahrzeugseitiges System angeschlossen ist, das über eine Notfallfunktion verfügt, und dass die Steuereinrichtung bei Eintritt mindestens einer Notfallfunktion des fahrzeugseitigen Systems die Sicherungseinrichtung unmittelbar oder mittelbar deaktiviert.

Die Sicherungseinrichtung kann jede beliebige Betätigungseinrichtung mit Sicherungselementen umfassen, wie z. B. elektrischen, pneumatischen oder hydraulischen Aktuatoren mit Blockierstiften oder Blockierklinken. Die Sicherungseinrichtung greift vorzugsweise an der Verschlusseinrichtung der Fahrzeugkupplung an. Bei Sattelkupplungen kann dies der Verschlusshaken oder der Verschlussriegel oder die Einrichtung zur Betätigung des Verschlussriegels sein.

Unter der unmittelbaren Deaktivierung der Sicherungseinrichtung wird die sofortige Freigabe der Diebstahlsicherung insbesondere ohne zusätzliche menschliche Einwirkung verstanden.

Die mittelbare Deaktivierung der Sicherungseinrichtung ist ebenfalls möglich, wenn noch eine zusätzliche Sicherungsfunktion vorgesehen sein soll, um z. B. in einer Notfallsituation ein Trennen des Anhängers vom Zugfahrzeug durch beliebige Personen zu verhindern. Die mittelbare Deaktivierung der Sicherungseinrichtung ist von dem betreffenden fahrzeugseitigen System und gegebenenfalls von Zusatzgeräten der Diebstahlsicherungsvorrichtung abhängig, wobei bei Eintritt der Notfallsituation noch zusätzliche Maßnahmen z. B. durch Notfallhelfer zur Deaktivierung der Sicherungseinrichtung ergriffen werden müssen. Diese zusätzlichen Maßnahmen werden im Zusammenhang mit den einzelnen fahrzeugseitigen Systemen, an die die Diebstahlsicherungsvorrichtung angeschlossen ist, beschrieben.

Die mittelbare Deaktivierung kann auch als Option zusätzlich zur unmittelbaren Deaktivierung in der Diebstahlsicherungsvorrichtung vorgesehen sein. Die fahrzeugseitigen Systeme sind wenn sie mit der Steuereinrichtung verbunden sind Bestandteil der Diebstahlsicherungsvorrichtung.

Vorzugsweise ist die Steuereinrichtung an mindestens zwei fahrzeugseitige Systeme angeschlossen, wobei die Steuereinrichtung bei Eintritt von mindestens zwei Notfallfunktionen der fahrzeugseitigen Systeme die Sicherungseinrichtung deaktiviert. Bei dieser Ausführungsform wird die Deaktivierung nur dann vorgenommen, wenn zwei oder mehr Notfallfunktionen auftreten. Es wird eine logische Undverknüpfung vorzugsweise innerhalb eines bestimmten Zeitfensters hergestellt. Wenn innerhalb dieses Zeitfensters die Notfallfunktionen auftreten, findet die Deaktivierung statt.

Vorzugsweise ist die Steuereinrichtung zur Verarbeitung von Signalen des fahrzeugseitigen Systems und zur Schaltung der Sicherungseinrichtung ausgebildet, wenn vorgegebene Systemwerte erreicht werden. Im Fall der Verknüpfung mit Beschleunigungssensoren sind die Systemwerte Beschleunigungswerte, die z. B. bei einem Unfall auftreten.

Fahrzeugseitige Systeme sind solche, über die das Fahrzeug ohnehin verfügt.

Vorzugsweise umfasst das fahrzeugseitige System daher mindestens einen Airbag, ein Rückhaltesystem, einen Crashsensor, einen Beschleunigungssensor, das Antiblockiersystem oder die Zentralverriegelungsvorrichtung des Fahrzeugs. Im Einzelnen wird die Sicherungseinrichtung dann deaktiviert, wenn mindestens ein Airbag ausgelöst wird, ein Rückhaltesystem, wie z. B. Gurtstraffer, aktiviert wird oder ein Crashsensor oder ein Beschleunigungssensor anspricht.

Es können die Notfallfunktionen auch verknüpft werden, z. B. das Auslösen eines Airbags und das Eingreifen des Antiblockiersystems, so dass nur dann, wenn beide Funktionen vorliegen, die Deaktivierung durchgeführt wird.

Bei der Zentralverriegelungseinrichtung ist in der Regel als Notfallfunktion die Aufhebung der Zentralverriegelungsfunktion vorgesehen, so dass Verletzte aus dem Fahrzeug geborgen werden können, ohne dass die Türen aufgebrochen werden müssen. Diese Funktion wird genutzt, um in Notfallsituationen auch die Diebstahlsicherung zu deaktivieren und somit ein problemloses Trennen von Anhänger und Zugfahrzeug zu ermöglichen.

Bei der Verknüpfung der Steuereinrichtung mit der Zentralverriegelungseinrichtung des Fahrzeugs ist außer der unmittelbaren Deaktivierung der Sicherungseinrichtung auch eine mittelbare Deaktivierung möglich. Es kann z. B. vorgesehen sein, dass eine Deaktivierung nur dann erfolgt, wenn eine definierte Abfolge von Betätigungen der Zentralverriegelungseinrichtung durchgeführt wird, die z. B. nur von Nothelfern oder Rettungspersonal ausgeführt werden kann. Spezielle Abfolgen von Betätigungen können z. B. fünfmaliges Öffnen und Schließen der Zentralverriegelung, dreimaliges Öffnen und zweimaliges Schließen und anschließendes einmaliges Öffnen der Zentralverriegelung sein.

Solche Abfolgen der Betätigung stellen einen Code dar, der nur von autorisierten Personen, z. B. von Notfallhelfern ausgeführt werden können, die entweder diese Abfolge und somit diesen Code kennen oder diesen Code bei der betreffenden Spedition abfragen. Dadurch wird verhindert, dass in Unfallsituationen eine Plünderung, d. h. ein Diebstahl des Aufliegers oder des Anhängers, vermieden werden kann.

Gemäß einer weiteren Ausführungsform kann die Steuereinrichtung an ein fahrzeugseitiges System angeschlossen sein, das das Energiesystem des Fahrzeugs darstellt. Die Steuereinrichtung ist zum Erkennen des Energieausfalls ausgebildet und deaktiviert beim Ausfall des Energiesystems vorzugsweise in Verbindung mit einer weiteren Notfallfunktion die Sicherungseinrichtung.

Damit die Deaktivierung erfolgen kann, verfügt die Diebstahlsicherungsvorrichtung vorzugsweise über eine eigene Energieversorgungseinrichtung, insbesondere Stromversorgungseinrichtung. Diese eigene Energieversorgungseinrichtung kann auch als Notstromversorgung ausgebildet sein, die nur bei einem Ausfall des fahrzeugseitigen Energiesystems aktivierbar ist.

Die Steuereinrichtung ist vorzugsweise an ein Codeeingabegerät angeschlossen ist, das zur Codeeingabe freizuschalten ist. In einer Notfallsituation ist die Steuereinrichtung zur Freischaltung des Codeeingabegerätes ausgebildet, so dass von autorisierten Personen der erforderliche Code zur Deaktivierung der Diebstahlsicherung eingegeben werden kann. In dieser Ausführungsform wird die Sicherungseinrichtung ebenfalls mittelbar deaktiviert.

Im Falle eines Ausfalls des Codeeingabegerätes als Folge eines Unfalls ist die Steuereinrichtung zur Erkennung dieser Notfallfunktion ausgebildet und deaktiviert die Diebstahlsicherungsvorrichtung unmittelbar, ohne dass ein menschliches Einwirken notwendig ist.

Das Codeeingabegerät als Bestandteil der Diebstahlsicherungsvorrichtung kann im Fahrzeug angeordnet sein, wobei die Codeeingabe am Gerät oder über eine drahtlose Verbindung über ein externes Gerät, wie z. B. über das Internet und den Bordcomputer, erfolgen kann.

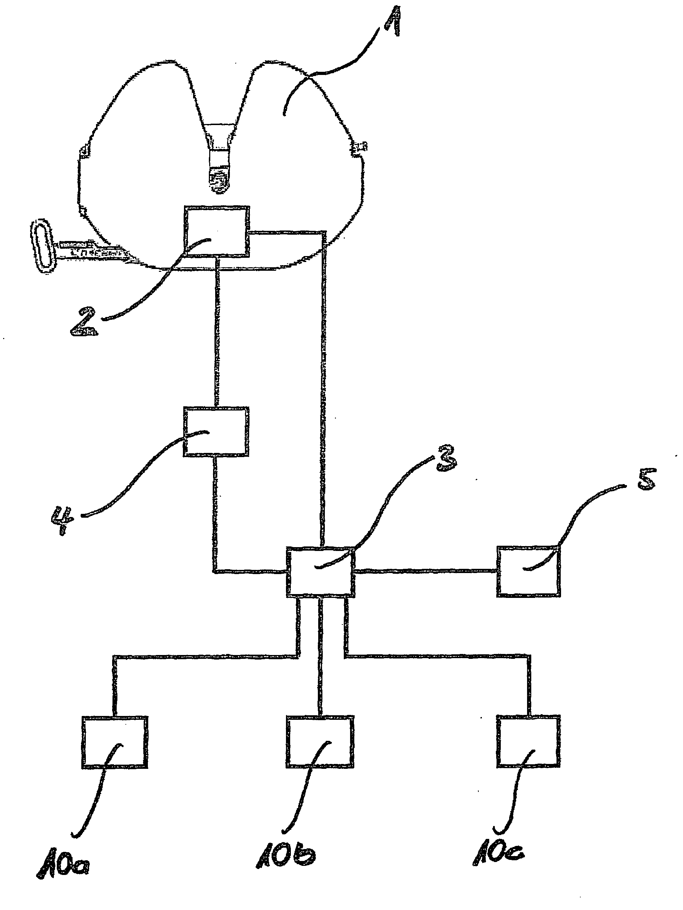

In der einzigen Figur ist eine schematische Darstellung einer bevorzugten Ausführungsform einer Diebstahlsicherungsvorrichtung zu sehen. An einer schematisch dargestellten Sattelkupplung 1 ist eine Sicherungseinrichtung 2 angeordnet. Vorzugsweise befindet sich diese Sicherungseinrichtung 2 unterhalb der Sattelkupplungsplatte im Bereich der Verschlusseinrichtung (nicht dargestellt) der Sattelkupplung 1, die nach dem Einfahren des am Auflieger befindlichen Königszapfens (nicht dargestellt) verriegelt wird. Die Sicherungseinrichtung 2 hat die Aufgabe, die Verschlusseinrichtung der Sattelkupplung zusätzlich zu blockieren, wenn dies gewünscht wird und freizugeben, wenn die Situation dies erfordert. Die Sicherungseinrichtung 2 verfügt beispielsweise über einen Aktuator und einen Blockierstift, der an einem Bauteil der Verschlusseinrichtung der Sattelkupplung angreift und auf diese Weise eine Blockierung des betreffenden Bauteils bewirkt.

An diese Sicherungseinrichtung 2 ist eine Steuereinrichtung 3 angeschlossen, die die Sicherungseinrichtung 2 ansteuert.

Die Steuereinrichtung 3 ist beispielhaft an drei fahrzeugseitige Systeme 10a,b,c angeschlossen, die stellvertretend für beispielsweise einen oder mehrere Airbags, die Zentralverriegelung und gegebenenfalls das Energiesystem des Fahrzeugs stehen. Zusätzlich kann die Vorrichtung über eine eigene Stromversorgung 4 verfügen, über die die Sicherungseinrichtung 2 und die Steuereinrichtung 3 mit Strom versorgt werden, wenn beispielsweise die Energieversorgung 10c des Fahrzeugs ausfällt.

Die Steuereinrichtung 3 ist zur Erkennung des Ausfalls des Energiesystems ausgebildet, wobei gleichzeitig die separate Stromversorgung 4 aktiviert wird.

Außerdem ist die Steuereinrichtung 3 zum Verarbeiten von Signalen der anderen fahrzeugseitigen Systeme 10a,b ausgebildet und ist somit in der Lage, bei Eintreten der Notfallfunktionen mindestens eines der fahrzeugseitigen Systeme 10a-10c die Sicherungseinrichtung 2 so anzusteuern, dass diese die Blockade des Verschlusssystems aufhebt.

Zusätzlich ist noch eine Codeeingabevorrichtung 5 eingezeichnet, über die die Steuereinrichtung 3 im Normalfall angesteuert wird, wenn die dafür vorgesehene autorisierte Person den entsprechenden Zahlencode eingibt.

Das Codeeingabegerät 5 kann, um es vor unbefugtem Gebrauch zu schützen, gesperrt sein, insbesondere dann, wenn sich das Fahrzeug auf dem Weg zum Bestimmungsort befindet. Dadurch wird verhindert, dass bei einem Überfall auf das Fahrzeug der Fahrer gezwungen werden kann, die entsprechende Codezahl einzugeben, um auf diese Weise den Auflieger abkoppeln zu können.

Um in einer Notfallsituation die Codezahl eingeben zu können, ist die Steuereinrichtung 3 bei Erkennen der Notfallfunktion des fahrzeugseitigen Systems 10a-10c zur Freigabe des Codeeingabegerätes 5 ausgebildet.

### Bezugszeichenliste

- 1: Sattelkupplung
- 2: Sicherungseinrichtung
- 3: Steuereinrichtung
- 4: Stromversorgungseinrichtung
- 5: Codeeingabegerät
- 10a,b,c: fahrzeugseitiges System

## Patentansprüche

1. Diebstahlsicherungsvorrichtung für eine an einem Fahrzeug angeordnete Fahrzeugkupplung, insbesondere eine Sattelkupplung (1), mit einer Sicherungseinrichtung (2), die an einem Bauteil der Fahrzeugkupplung angreift und dieses Bauteil blockiert oder freigibt, und mit einer Steuereinrichtung (3), die an die Sicherungseinrichtung (2) elektrisch angeschlossen ist und die Sicherungseinrichtung aktiviert oder deaktiviert,
**dadurch gekennzeichnet,**
**dass** die Steuereinrichtung (3) an mindestens ein fahrzeugseitiges System (10a, 10b, 10c) angeschlossen ist, das über eine Notfallfunktion bei Vorliegen einer Notfallsituation verfügt, in welcher der Anhänger vom Zugfahrzeug durch Notfallhelfer am Unfallort trennbar ist, und
**dass** die Steuereinrichtung (3) bei Eintritt mindestens einer Notfallfunktion des fahrzeugseitigen Systems (10a, 10b, 10c) die Sicherungseinrichtung (2) unmittelbar oder mittelbar deaktiviert, wobei die unmittelbare Deaktivierung eine sofortige Freigabe der Diebstahlsicherung bewirkt und die mittelbare Deaktivierung von dem fahrzeugseitigen System abhängig ist und bei Eintritt der Notfallsituation zusätzliche Maßnahmen zur Deaktivierung ergriffen werden müssen.

2. Vorrichtung nach Anspruch 1, **dadurch gekennzeichnet, dass** die Steuereinrichtung (3) an mindestens zwei fahrzeugseitige Systeme (10a,b,c) angeschlossen ist und dass die Steuereinrichtung bei Eintritt von mindestens zwei Notfallfunktionen der fahrzeugseitigen Systeme die Sicherungseinrichtung (2) deaktiviert wird.

3. Vorrichtung nach Anspruch 1, **dadurch gekennzeichnet, dass** das fahrzeugseitige System (10a,b,c) mindestens einen Airbag, ein Rückhaltesystem, einen Crashsensor, einen Beschleunigungssensor, das Antiblockiersystem (ABS) oder die Zentralverriegelungsvorrichtung des Fahrzeugs umfasst.

4. Vorrichtung nach einem der Ansprüche 1 bis 3, **dadurch gekennzeichnet, dass** die Steuereinrichtung (3) zur Verarbeitung von Signalen des fahrzeugseitigen Systems (10a, b, c) und zur Schaltung der Sicherungseinrichtung (2) ausgebildet ist, wenn vorgegebene Systemwerte des fahrzeugseitigen Systems (10a, b, c) erreicht werden.

5. Vorrichtung nach Anspruch 1 oder 3, **dadurch gekennzeichnet, dass** das fahrzeugseitige System (10a, b, c) das Energiesystem des Fahrzeugs ist und, dass die Steuereinrichtung (3) beim Ausfall des Energiesystems die Sicherungseinrichtung (2) deaktiviert.

6. Vorrichtung nach einem der Ansprüche 1 bis 5, **dadurch gekennzeichnet, dass** die Diebstahlsicherungsvorrichtung über eine eigene Energieversorgungseinrichtung (4) verfügt.

7. Vorrichtung nach Anspruch 6, **dadurch gekennzeichnet, dass** die eigene Energieversorgungseinrichtung (4) eine Notstromversorgung ist, die bei Ausfall des fahrzeugseitigen Energiesystems aktivierbar ist.

8. Vorrichtung nach einem der Ansprüche 1 bis 7, **dadurch gekennzeichnet, dass** die Steuereinrichtung (3) an ein Codeeingabegerät (5) angeschlossen ist, das zur Codeeingabe freizuschalten ist.

9. Vorrichtung nach Anspruch 8, **dadurch gekennzeichnet, dass** die Steuereinrichtung (3) das Codeeingabegerät (5) zur Eingabe des Codes freischaltet und in Abhängigkeit von der Codeeingabe oder des Systemzustandes des Codeeingabegerätes die Sicherungseinrichtung (2) deaktiviert.

10. Vorrichtung nach einem der Ansprüche 8 oder 9, **dadurch gekennzeichnet, dass** das Codeeingabegerät (5) im Fahrzeug angeordnet ist und die Codeeingabe am Gerät (5) erfolgt.

## Claims

1. An anti-theft device for a vehicle coupling located in a vehicle, in particular a fifth wheel coupling (1), having a security apparatus (2), which acts on a component of the vehicle coupling and blocks or releases said component, and having a control apparatus (3), which is electrically connected to the security apparatus (2) and activates or deactivates the security apparatus,
**characterised in that**
the control apparatus (3) is connected to at least one on-board system (10a, 10b, 10c) which has an emergency function in case of an emergency situation, in which the trailer can be separated from the towing vehicle by emergency service personnel at the accident site, and **in that**
upon the occurrence of at least one emergency function of the on-board system (10a, 10b, 10c), the control apparatus (3) deactivates the security apparatus (2) directly or indirectly, wherein direct deactivation causes immediate unlocking of the anti-theft device and indirect deactivation is dependent on the on-board system, and, when an emergency situation occurs, additional measures must be taken for deactivation.

2. A device according to claim 1, **characterised in that** the control apparatus (3) is connected to at least two on-board systems (10a, b, c) and **in that** upon the occurrence of at least two emergency functions of the on-board systems the control apparatus (3) deactivates the security apparatus (2).

3. A device according to claim 1, **characterised in that** the on-board system (10a, b, c) comprises at least one airbag, one restraint system, one crash sensor, one acceleration sensor, the antilock brake system (ABS) or the central locking device of the vehicle.

4. A device according to any one of claims 1 to 3, **characterised in that** the control apparatus (3) is designed to process signals of the on-board system (10a, b, c) and to trip the security apparatus (3) when predetermined system values of the on-board system (10a, b, c) are reached.

5. A device according to claim 1 or 3, **characterised in that** the on-board system (10a, b, c) is the energy system of the vehicle, and **in that** the control apparatus (3) deactivates the security apparatus (2) upon failure of the energy system.

6. A device according to any one of claims 1 to 5, **characterised in that** the anti-theft device has a separate energy supply device (4).

7. A device according to claim 6, **characterised in that** the separate energy supply device (4) is an emergency power supply, which can be activated upon failure of the on-board energy system.

8. A device according to any one of claims 1 to 7, **characterised in that** the control apparatus (3) is connected to a code input device (5) which is to be unlocked for entering the code.

9. A device according to claim 8, **characterised in that** the control apparatus (3) unlocks the code input device (5) for entering the code and deactivates the security apparatus (2) according to the code input or the system state of the code input device.

10. A device according to claim 8 or 9, **characterised in that** the code input device (5) is arranged in the vehicle and the code input takes place at the device (5).

## Revendications

1. Dispositif antivol pour un système d'attelage disposé sur un véhicule, en particulier une sellette d'attelage (1), avec un dispositif de sécurité (2) qui agit sur un composant du système d'attelage en bloquant ou libérant ce composant, et avec un dispositif de commande (3) qui est connecté électriquement au dispositif de sécurité (2) et qui active ou désactive le dispositif de sécurité,
**caractérisé en ce**
**que** le dispositif de commande (3) est connecté à au moins un système côté véhicule (10a, 10b, 10c) qui dispose d'une fonction d'urgence en présence d'une situation d'urgence dans laquelle la remorque peut être séparée du véhicule tracteur par des secouristes sur le lieu d'accident, et
**que** le dispositif de commande (3) désactive directement ou indirectement le dispositif de sécurité (2) en cas de survenance d'au moins une fonction d'urgence du système côté véhicule (10a, 10b, 10c), la désactivation directe entraînant une libération immédiate du dispositif antivol et la désactivation indirecte dépendant du système côté véhicule et des mesures de désactivation supplémentaires devant être prises en cas de survenance de la situation d'urgence.

2. Dispositif selon la revendication 1, **caractérisé en ce que** le dispositif de commande (3) est connecté à au moins deux systèmes côté véhicule (10a, b, c) et que le dispositif de commande désactive le dispositif de sécurité (2) en cas de survenance d'au moins deux fonctions d'urgence des systèmes côté véhicule.

3. Dispositif selon la revendication 1, **caractérisé en ce que** le système côté véhicule (10a, b, c) comprend au moins un airbag, un système de retenue, un capteur de collision, un capteur d'accélération, le système de freinage antiblocage (ABS) ou le dispositif de verrouillage centralisé du véhicule.

4. Dispositif selon une des revendications 1 à 3, **caractérisé en ce que** le dispositif de commande (3) est conçu pour traiter des signaux du système côté véhicule (10a, b, c) et pour commuter le dispositif de sécurité (2) quand des valeurs de système prédéfinies du système côté véhicule (10a, b, c) sont atteintes.

5. Dispositif selon la revendication 1 ou 3, **caractérisé en ce que** le système côté véhicule (10a, b, c) est le système d'énergie du véhicule et que le dispositif de commande (3) désactive le dispositif de sécurité (2) en cas de défaillance du système d'énergie.

6. Dispositif selon une des revendications 1 à 5, **caractérisé en ce que** le dispositif antivol dispose d'un dispositif d'alimentation en énergie dédié (4).

7. Dispositif selon la revendication 6, **caractérisé en ce que** le dispositif d'alimentation en énergie dédié (4) est une alimentation de secours qui peut être activée en cas de défaillance du système d'énergie côté véhicule.

8. Dispositif selon une des revendications 1 à 7, **caractérisé en ce que** le dispositif de commande (3) est connecté à un appareil de saisie de code (5) qui doit être activé pour la saisie d'un code.

9. Dispositif selon la revendication 8, **caractérisé en ce que** le dispositif de commande (3) active l'appareil de saisie de code (5) pour la saisie du code et désactive le dispositif de sécurité (2) en fonction de la saisie du code ou de l'état système de l'appareil de saisie de code.

10. Dispositif selon une des revendications 8 ou 9, **caractérisé en ce que** l'appareil de saisie de code (5) est disposé dans le véhicule et la saisie du code a lieu sur l'appareil (5).
